# EUROPEAN PATENT SPECIFICATION

(11) **EP 2 667 612 B1**
(45) Date of publication and mention of the grant of the patent: **24.02.2016**
(21) Application number: 13169060.4
(22) Date of filing: 24.05.2013
(51) Int. Cl.: G09G 5/393, H04N 19/112, H04N 19/16

(54) **Display device and control method thereof**
Anzeigevorrichtung und Verfahren zu ihrer Ansteuerung
Dispositif d'affichage et son procédé de contrôle

(30) Priority: 24.05.2012 TW 101118467; 25.05.2012 TW 101118661
(43) Date of publication of application: 27.11.2013
(73) Proprietor: InnoLux Corporation, Chu-Nan, Miao-Li 350 (TW)
(72) Inventor: Tsai, Yung-Yu, 350 Chu-Nan, Miao-Li County (TW); Cheng, Chien-Chou, 350 Chu-Nan, Miao-Li County (TW)
(74) Representative: 2K Patentanwälte Blasberg Kewitz & Reichel

(56) References cited:
- US-A1- 2009 002 397
- US-A1- 2009 021 499
- US-A1- 2009 122 052
- US-A1- 2009 322 661

## Description

### BACKGROUND

### FIELD OF THE INVENTION

The disclosure relates to a display device, and more particularly to a display device, which is capable of reducing a bandwidth of a memory.

### DESCRIPTION OF THE RELATED ART

Because cathode ray tubes (CRTs) are inexpensive and provide high definition, they are utilized extensively in televisions and computers. With technological development, new flat-panel displays are continually being developed. When a larger display panel is required, the weight of the flat-panel display does not substantially change when compared to CRT displays.

With an increase in the resolution of the display panel, an amount of image data required by the display panel is increased. To access the image data, a conventional method increases the number and bandwidth of memory. Thus, the cost of the flat-panel display is increased.

US 2009/322661 A1 discloses a display apparatus including a plurality of frame rate controllers that generate a motion interpolated intermediate image. The frame rate controllers exchange image information with adjacent frame rate controllers. According to the display apparatus, each frame rate controller displays the intermediate image on a corresponding display area based on the image information provided from the adjacent frame rate controller.

US 2009/002397 A1 discloses a method and an apparatus for converting one or more images for display on a display surface. The output image is obtained from an input image. We scale the input image to generate a foreground image, in which a content of the foreground image corresponds directly to a content of the input image, and in which a resolution of the foreground image when displayed is smaller than a resolution of a display surface. The input image is also transformed to a background image, in which a content of the background image depends indirectly on the input image, and in which a resolution of the background image is larger than the resolution of the foreground image. Next, the foreground image is combined with the background image to form the output image, in which pixels of the foreground image replace corresponding pixels of the background image.

US 2009/122052 A1 discloses an overdrive apparatus for advancing the response time of a liquid crystal display (LCD), comprising a overdrive table, a memory storage, and a determining device, wherein the overdrive table is used for saving a plurality of overdrive-voltage values, the memory storage is used for saving a first frame, the determining device receives a first pixel, which is corresponding with a second pixel of the first frame, wherein the determining device can select an overdrive-voltage value from the overdrive table according to the first pixel and the second pixel, wherein the memory storage is provided within a first chipset, which comprises a first active face and a plurality of first bond pads provided on the first active face; the determining device is provided within a second chipset, which comprises a second active face and a plurality of second bond pads provided on the second active face, wherein the first chipset and the second chipset are stacked with each other, and the second bond pads are electrically connected to the first bond pads.

US 2009/021499 A1 discloses a display driving apparatus and a method thereof. The apparatus includes a memory unit, a compression and decompression unit, a data selection unit, and a display accelerating unit. The memory unit is coupled to the compression and decompression unit and stores only a compressed frame to save memory space in the apparatus. The data selection unit determines whether an error is caused to a frame through data compression and decompression. When the error is greater than a predetermined value, the display accelerating unit turns off an overdriving process (OD process) upon the pixels to avoid image distortion. The data selection unit also determines whether the frames are static or dynamic in order to determine whether to turn on the overdriving process.

### SUMMARY

In accordance with an embodiment, a display device comprises a display panel and a timing controller. The display panel sequentially displays a first image and a second image according to a first output image and a second output image. The timing controller sequentially receives a first input image and a second input image and sequentially generates the first output image and the second output image and comprises a receiving unit, a first transformation unit, a second transformation unit and a processing unit. The receiving unit generates a processing image and a read-out image according to the first input image and the second input image. The first transformation unit transforms a resolution of the processing image to generate a first transformed image. The second transformation unit transforms a resolution of the read-out image to generate a second transformed image. The processing unit processes the first and the second transformed images to generate the first output image. The resolution of the processing image and the resolution of the read-out image are less than a resolution of the display panel, wherein a resolution of the first transformed image is larger than the resolution of the processing image.

In accordance with a further embodiment, a method comprises: sequentially receiving a first input image and a second input image and sequentially generating a first output image and a second output image; storing the first and the second input images and generating a processing image and a read-out image; transforming a resolution of the processing image to generate a first transformed image; transforming a resolution of the read-out image to generate a second transformed image; processing the first and the second transformed images to generate the first output image; and providing the first output image to a display device to display an image. The resolution of the processing image and the resolution of the read-out image are less than a resolution of the display device, wherein a resolution of the first transformed image is larger than the resolution of the processing image.

A detailed description is given in the following embodiments with reference to the accompanying drawings.

### BRIEF DESCRIPTION OF THE DRAWINGS

The invention can be more fully understood by referring to the following detailed description and examples with references made to the accompanying drawings, wherein:
FIG. 1 is a schematic diagram of an exemplary embodiment of a display device;
FIGs. 2-5 are schematic diagrams of other exemplary embodiments of the timing controller; and
FIGs. 6-7 are schematic diagrams of other exemplary embodiments of a control method.

### DETAILED DESCRIPTION

The following description is exemplary embodiments of carrying out the invention. This description is made for the purpose of illustrating the general principles of the invention and should not be taken in a limiting sense. The scope of the invention is best determined by reference to the appended claims.

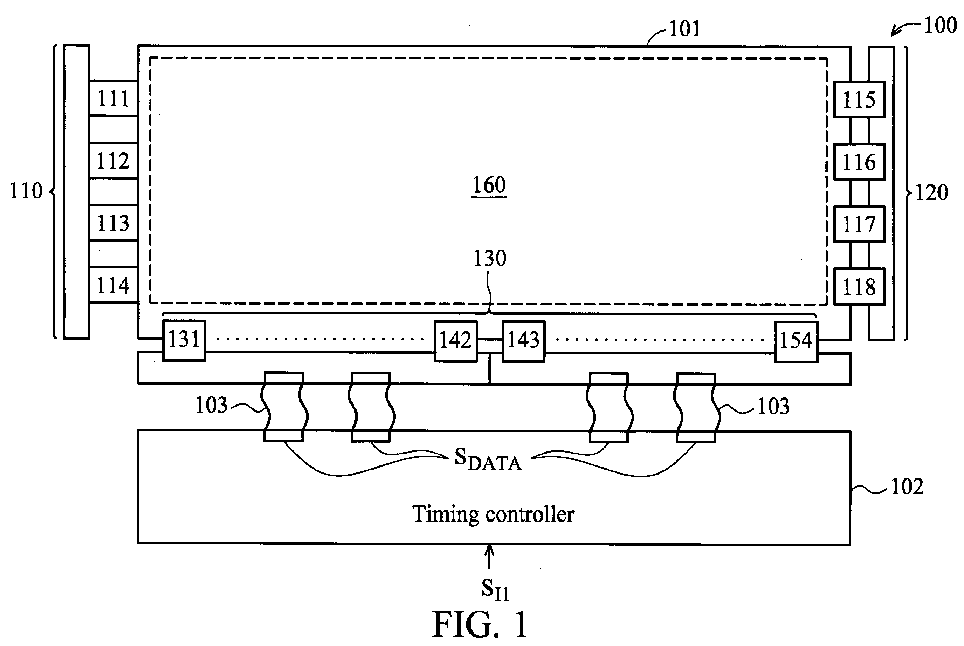

FIG. 1 is a schematic diagram of an exemplary embodiment of a display device. The display device 100 comprises a display panel 101 and a timing controller (TCON) 102. In this embodiment, the timing controller 102 controls the display panel 101 via a flexible printed circuit (FPC) 103 such that an image is displayed by the display panel 101. The invention does not limit the kind of the display panel 101. In one embodiment, the display panel 101 is a self-luminescent panel or a reflective panel. In another embodiment, the resolution of the display panel 101 is 3840x2160.

The invention does not limit the kind of the display device 100. In one embodiment, the display device 100 is a personal digital assistant (PDA), a cellular phone, a digital camera (DSC), a television, a global positioning system (GPS), a car display, an avionics display, a digital photo frame, a notebook computer (NB), or a personal computer (PC).

In this embodiment, the display panel 101 comprises scan groups 110 and 120, a data group 130 and a display region 160, but the disclosure is not limited thereto. In other embodiments, any circuit structure can be applied in the display panel 101, as long as the circuit structure is capable of displaying an image in the display region 160.

As shown in FIG. 1, the scan group 110 is placed on the left hand side of the display region 160 and comprises gate drivers 111∼114. The scan group 120 is placed on the right hand side of the display region 160 and comprises gate drivers 115-118. The gate drivers 111∼118 provide a plurality of scan signals to pixels in the display region 160. The invention does not limit the number and the position of the scan groups. In one embodiment, the display panel 101 only comprises a single scan group and is placed on any side of the display region 160. In another embodiment, the number of the gate drivers is proportional to the number of the pixels in the display region 160.

In this embodiment, the data group 130 comprises source drivers 131 ∼154 to provide a plurality of data signals to the pixels in the display region 160. The invention does not limit the number of the source drivers. In one embodiment, the number of the source drivers is proportional to the number of the pixels in the display region 160.

The timing controller 102 generates a serial output image S_{DATA} to the display panel 101 according to a serial input image S_{I} such that the display panel 101 displays a serial image according to the serial output image S_{DATA}. The invention does not limit the format of the input image S_{I}. In one embodiment, the input image S_{I} is a low voltage differential signaling (LVDS) format.

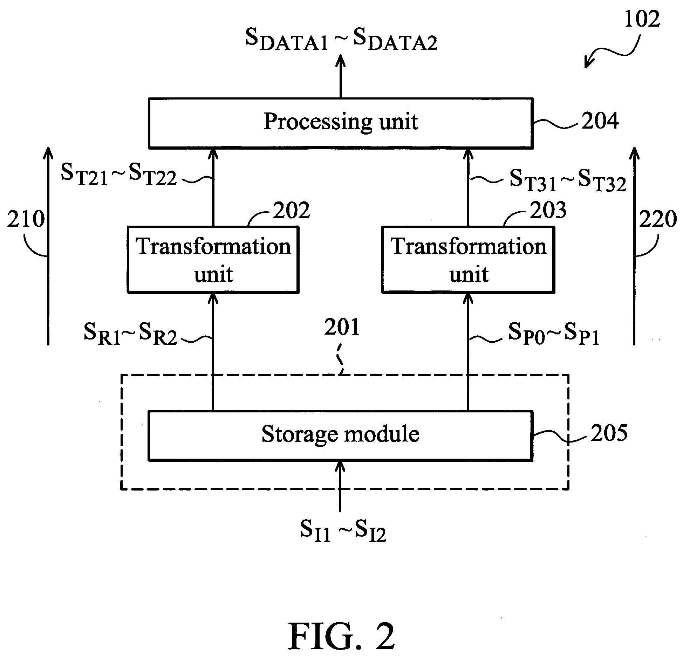

FIG. 2 is a schematic diagram of an exemplary embodiment of the timing controller. The timing controller 102 sequentially receives input images S_{I1} and S_{I2} and sequentially generates output images S_{DATA1}∼S_{DATA2}. In this embodiment, the timing controller 102 comprises a receiving unit 201, transformation units 202, 203 and a processing unit 204.

The receiving unit 201 generates read-out images S_{R1}∼S_{R2} according to the input images S_{I1}∼S_{I2}. In this embodiment, the receiving unit 201 comprises a storage module 205 to store the input images S_{I1}∼S_{I2} and serves the input images S_{I1}∼S_{I2} as the read-out images S_{R1}∼S_{R2}. In one embodiment, the resolutions of the read-out images S_{R1}∼S_{R2} are equal to the resolutions of the input images S_{I1}∼S_{I2}, such as 1920x1080.

In this embodiment, the receiving unit 201 further provides processing images S_{P0}∼S_{P1}. The invention does not limit the relationship between the processing images S_{P0}∼S_{P1} and the read-out images S_{R1}∼S_{R2}. In one embodiment, the resolutions of the processing images S_{P0}∼S_{P1} are equal to the resolutions of the read-out images S_{R1}∼S_{R2}. In another embodiment, the processing image S_{P0} is a pre-determined image, and the processing image S_{P1} is the same as the read-out image S_{R1}. In other embodiments, the resolutions of the processing images S_{P0}∼S_{P1}, and read-out images S_{R1}∼S_{R2} are less than the resolution of the display panel 101. The resolution of the display panel 101 may be 3840x2160.

The transformation unit 202 transforms the read-out images S_{R1}∼S_{R2} to generate transformed images S_{T21}∼S_{T22}. In this embodiment, after transformation, the resolutions of the transformed images S_{T21}∼S_{T22} are larger than the resolutions of the read-out images S_{R1}∼S_{R2}. In one embodiment, the resolution of one of the transformed images S_{T21}∼S_{T22} is equal to the resolution of the display panel 101.

The transformation unit 203 transforms the processing images S_{P0}∼S_{P1} to generate transformed images S_{T31}∼S_{T32}. Similarly, after transformation, the resolutions of the transformed images S_{T31}∼S_{T32} are larger than the resolutions of the processing images S_{P0}∼S_{P1}. In this embodiment, the resolution of one of the transformed images S_{T31}∼S_{T32} is equal to the resolution of the display panel 101.

The invention does not limit the circuit structures of the transformation units 202 and 203. Taking the transformation unit 202 as an example, any circuit structure can serve as the transformation unit 202, as long as the circuit structure is capable of adjusting the resolutions of the read-out images S_{R1} and S_{R2}. In one embodiment, the transformation unit 202 is a Scaler or a super resolution processor.

The processing unit 204 processes the outputs of the transformation units 202 and 203 to generate the output image S_{DATA1} and S_{DATA2}. The display panel 101 sequentially displays two images according to the output images S_{DATA1} and S_{DATA2}. The invention does not limit how the processing unit 204 processes the outputs of the transformation units 202 and 203. In one embodiment, the processing unit 204 processes the outputs of the transformation units 202 and 203 according to an over-driving (OD) process.

In this embodiment, the transformation unit 202 provides a first path 210 to transmit present image information and the transformation unit 203 provides a second path 220 to transmit previous image information for an OD process. The processing unit 204 executes the OD process for the image information transmitted by the paths 210 and 220.

During a first period, the storage module 205 stores the input signal S_{I1} and provides the read-out image S_{R1} according to the stored input signal S_{I1}. In this embodiment, the input signal S_{I1} is the same as the read-out image S_{R1}. Since the input signal S_{I1} is a first image, the storage module 205 provides a pre-determined image (e.g. S_{P0}) to the transformation unit 203. In this embodiment, the processing image S_{P0} is served as a previous image information.

The transformation units 202 and 203 transform the read-out image S_{R1} and the processing image S_{P0} to generate transformed images S_{T21} and S_{T31}, respectively. The processing unit 204 processes a present image (i.e. the transformed image S_{T21}) and a previous image (i.e. the transformed image S_{T31}) to generate the output image S_{DATA1} according to an OD process.

During a second period, the storage module 205 stores another input image S_{I2} and provides the read-out image S_{R2} according to the stored input image S_{I2}. In this embodiment, the read-out image S_{R2} is the same as the input image S_{I2}. Since the input image S_{I2} is a second image, the storage module 205 serves the previous image (i.e. the input image S_{I1}) as the processing image S_{P1}.

The transformation units 202 and 203 transform the read-out image S_{R2} and the processing image S_{P1} to generate transformed images S_{T22} and S_{T32}, respectively. The processing unit 204 processes the transformed images S_{T22} and S_{T32} to generate the output image S_{DATA2} according to an OD process.

In this embodiment, since the resolution of each image stored in the storage module 205 is less than the resolution of the display panel 101, the bandwidth of the storage module 205 is reduced. Taking a display panel as an example, assume the resolution of the display panel is 4k2k (i.e. 3840x2160). When the resolutions of the input images S_{I1} and S_{I2} are 3840x2160, the bandwidth and amount of the storage module 205 are required to be increased to store large image information. However, in this embodiment, the resolutions of the input images S_{I1} and S_{I2} are less than the resolution of the display panel. Thus, the bandwidth and amount of the storage module 205 are not required to be increased. In other embodiments, with an increase in the resolution of the display panel, the resolution of the display panel may be higher than 4k2k. In this case, the bandwidth and amount of the storage module 205 are not increased.

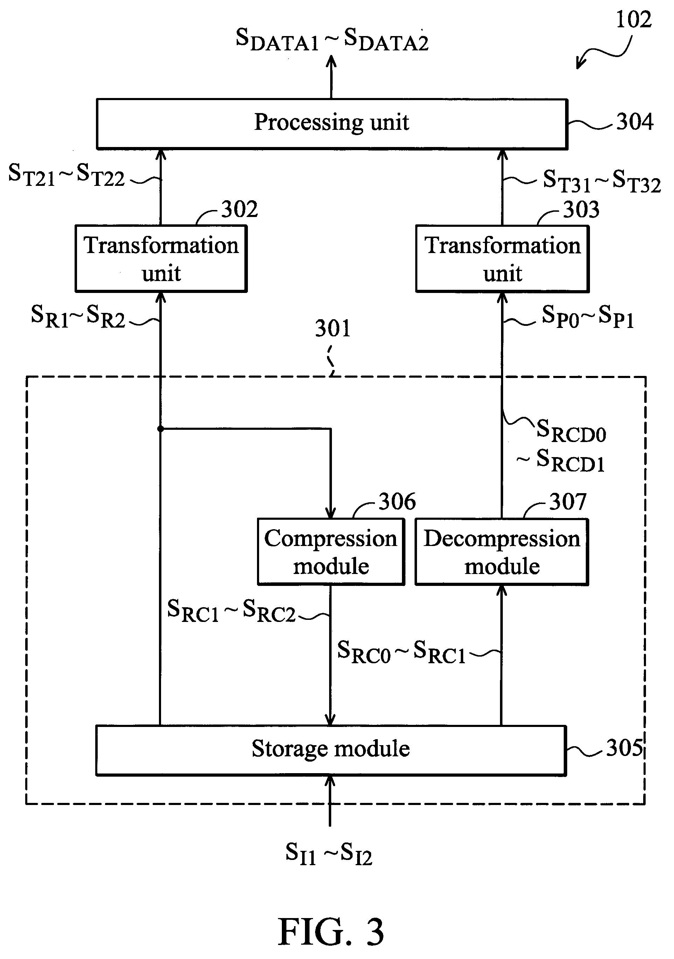

FIG. 3 is a schematic diagram of another exemplary embodiment of the timing controller. FIG. 3 is similar to FIG. 2 with the exception that the receiving unit 301 comprises a storage module 305, a compression module 306 and a decompression module 307. Since the operations of the transformation units 302, 303 and the processing unit 304 are the same as the operations of the transformation units 202, 203 and the processing unit 204, the descriptions of the transformation units 302, 303 and the processing unit 304 are omitted for brevity.

In this embodiment, when the transformation unit 302 transforms the read-out image S_{R1} or S_{R2}, the compression module 306 compresses the read-out image S_{R1} or S_{R2} to generate a compressed image S_{RC1} or S_{RC2}. The decompression module 307 decompresses the compressed image S_{RC0} or S_{RC1} stored in the storage module 305 and serves the decompressed result (e.g. the decompressed image S_{RCD0} or S_{RCD1}) as the processing image S_{P0} or S_{P1}.

The compressed image S_{RC1} or S_{RC2} generated by the compression module 306 is stored in the storage module 305 to replace the un-compressed image (e.g. S_{I1} or S_{I2}). Thus, the bandwidth of the storage module 305 can be reduced.

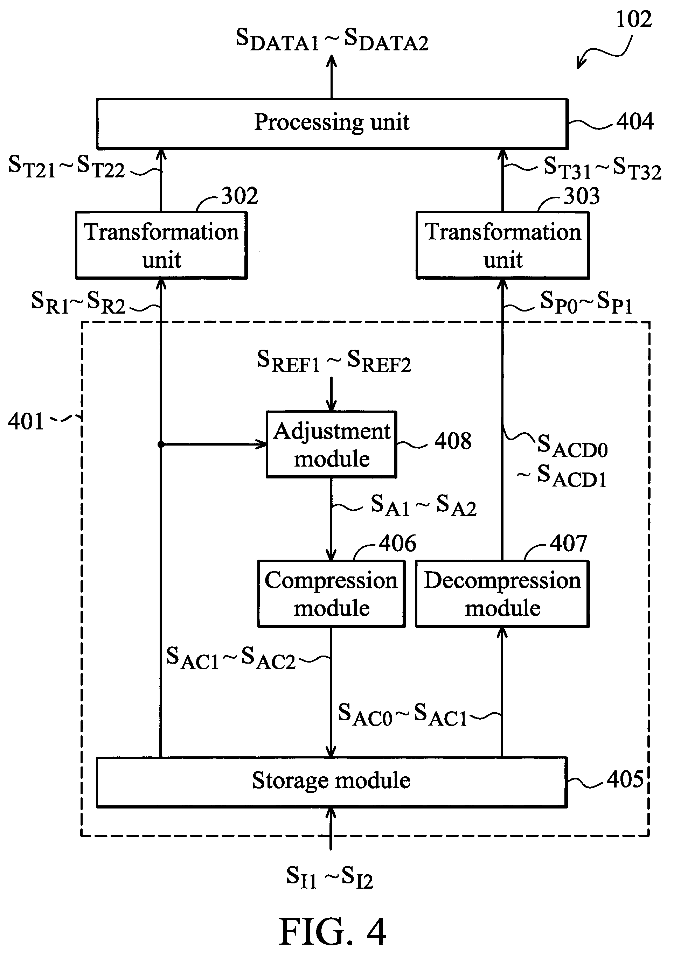

FIG. 4 is a schematic diagram of another exemplary embodiment of the timing controller. FIG. 4 is similar to FIG. 3 except for the addition of an adjustment module 408. Since the operations of the transformation units 402, 403 and the processing unit 404 are the same as the operations of the transformation units 302, 303 and the processing unit 304, the descriptions of the transformation units 402, 403 and the processing unit 404 are omitted for brevity.

In this embodiment, when the transformation unit 402 processes the read-out image S_{R1} or S_{R2}, the adjustment module 408 adjusts the read-out image S_{R1} or S_{R2} to generate an adjusted image S_{A1} or S_{A2} according to the reference condition S_{REF1} or S_{REF2}. The compression module 406 compresses the adjusted image S_{A1} or S_{A2} and stores the compressed result (e.g. S_{AC1} or S_{AC2}) in the storage module 405.

The invention does not limit the source of the reference condition S_{REF1} or S_{REF2}. In one embodiment, the reference conditions S_{REF1} and S_{REF2} are pre-determined. In another embodiment, the reference conditions S_{REF1} and S_{REF2} are previous images, such as the processing image S_{P0} and S_{P1}.

The invention does not limit how the adjustment module 408 adjusts the read-out images S_{R1}∼S_{R2}. In one embodiment, the adjustment module 408 executes an OD process. Taking the read-out images S_{R2} as an example, the adjustment module 408 utilizes the OD process to process the reference condition S_{REF2} and the read-out images S_{R2} to generate an adjusted image S_{A2}, wherein the reference condition S_{REF2} is the processing image S_{P1}.

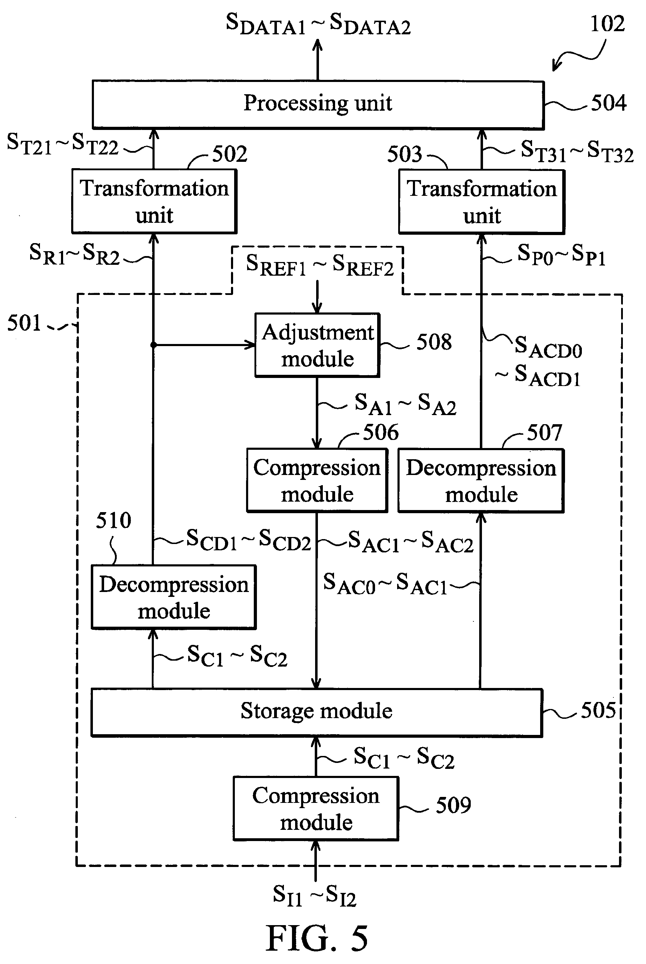

FIG. 5 is a schematic diagram of another exemplary embodiment of the timing controller. FIG. 5 is similar to FIG. 4 except for the additions of a compression module 509 and a decompression module 510. Since the operations of the transformation units 502, 503 and the processing unit 504 are the same as the operations of the transformation units 402, 403 and the processing unit 404, the descriptions of the transformation units 502, 503 and the processing unit 504 are omitted for brevity.

The compression module 509 compresses the input images S_{I1} and S_{I2} to generate compressed images S_{C1} and S_{C2}. The compressed images S_{C1} and S_{C2} are stored in the storage module 505. The decompression module 510 decompresses the compressed images S_{C1} and S_{C2} stored in the storage module 505 to generate decompressed images S_{CD1} and S_{CD2}. In this embodiment, the decompressed images S_{CD1} and S_{CD2} are served as the read-out images S_{R1} and S_{R2}.

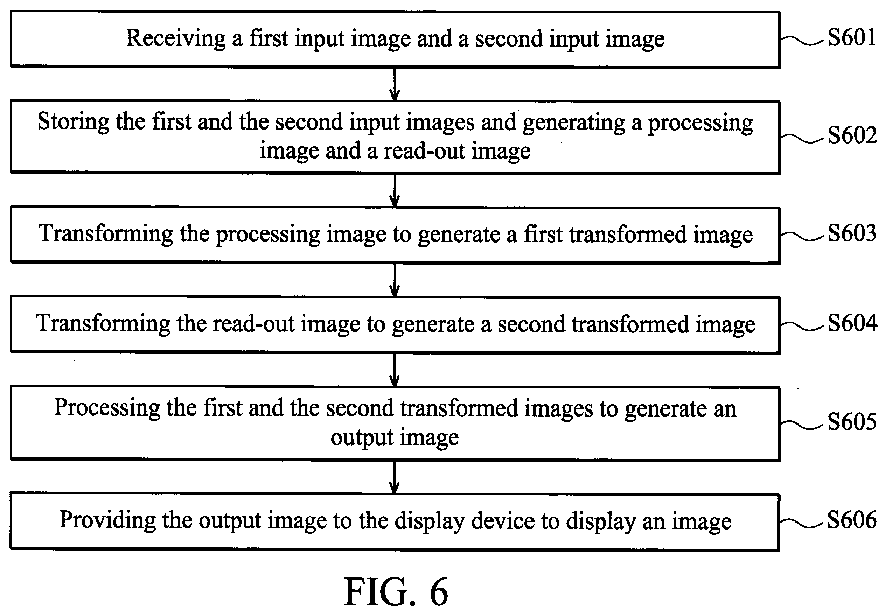

FIG. 6 is a schematic diagram of an exemplary embodiment of a control method. The control method is applied in a display device to display an image. First, a first input image and a second input image are received (step S601). The invention does not limit the formats of the first and the second input images. In one embodiment, the formats of the first and the second input images are LVDS formats. In another embodiment, the resolutions of the first and the second input images are 1920x1080.

The first and the second input images are stored and a processing image and a read-out image are generated (step S602). In one embodiment, the first and the second input images are stored in a DRAM. Additionally, the invention does not limit the generations of the processing image and the read-out image. In one embodiment, the processing image and the read-out image relate to the first and the second input images.

For example, during a first period, the first input image is stored and served as a read-out image. At this time, no a previous image occurred before the first input image such that a pre-determined image is beforehand stored and served as a processing image.

During a second period, the second input image is stored and served as another read-out image. At this time, since the first input image is a previous image occurring before the second input image, the first input image is served as a processing image. In this embodiment, the processing image is previous information and the read-out image is the present information.

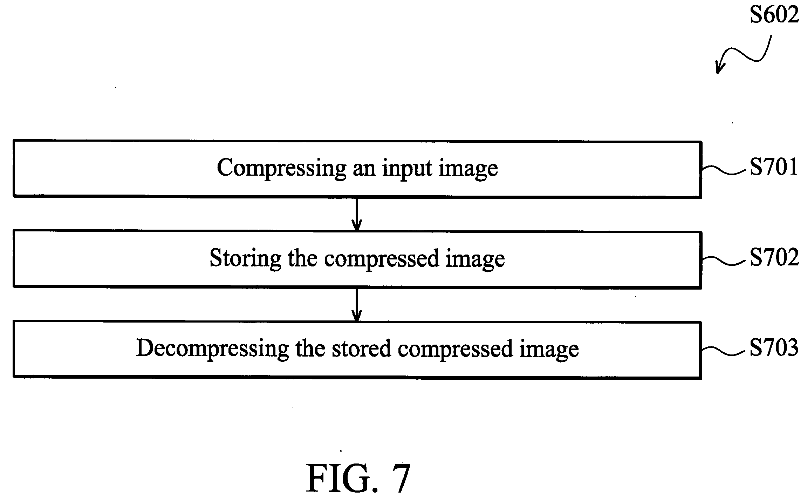

FIG. 7 is a schematic diagram of an exemplary embodiment of step S602. In step S701, an input image is compressed to generate a compressed image. The compressed image is stored (step S702). In step S703, the stored compressed image is decompressed. The decompressed result is served as a read-out image or a processing image.

For example, after receiving the first and the second input images, the first and the second input images are compressed to generate a first compressed image and a second compressed image. The first and the second compressed images are stored in a memory. Since the memory directly stores the compressed images, the usable space of the memory is increased and the bandwidth of the memory is reduced. When the memory is accessed, the stored compressed image is decompressed and the decompressed image is served as a processing image or a read-out image.

Refer to FIG. 6, step S603 is to transform the processing image to generate a first transformed image. In this embodiment, after transformation of the processing image, the resolution of the first transformed image is larger than the resolution of the processing image. In one embodiment, the resolution of the first transformed image is four times the resolution of the processing image.

The read-out image is transformed to generate a second transformed image (step S604). In this embodiment, the resolution of the second transformed image is larger than the resolution of the read-out image. In one embodiment, the resolutions of the first and the second transformed images are the same. Additionally, the resolution of the read-out image is the same as the resolution of the processing image.

The first and the second transformed images are processed to generate an output image (step S605) and the output image is provided to the display device to display an image (step S606). The invention does not limit how the first and the second transformed images are processed. In one embodiment, step S605 is to execute an OD process, but the disclosure is not limited thereto. In other embodiments, the first and the second transformed images are processed to generate information to be displayed in the display device according to other image processes.

In this embodiment, the resolutions of the processing image and the read-out image generated by step S602 are less than the resolution of the display device. For example, the resolutions of the processing image and the read-out image may be 1920x1080 and the resolution of the display device may be 3840x2160. In another embodiment, the resolution of the first transformed image generated by step S603 and the resolution of the second transformed image generated by step S604 are equal to the resolution of the display device.

In one embodiment, step S602 is to store the first and the second input images in a DRAM. Thus, data stored in the DRAM is directly served as a processing image or a read-out image. In another embodiment, step S602 is to compress the first and the second input images and then store the compressed images into the DRAM. In this case, data stored in the DRAM is first decompressed and then the decompressed result is served as the processing image or the read-out image.

In other embodiments, since the read-out image transformed by step S604 is present image information, when the read-out image is transformed, a transformed image segment of the read-out image is compressed and the compressed result replaces a portion of the read-out image stored in the DRAM. The stored compressed result can be served as previous image information. Since the DRAM is not required to store a transformed image, the bandwidth of the DRAM can be reduced, wherein the transformed image is not be compressed.

Before compressing, a reference condition is utilized to adjust an image data segment of a transformed image and the adjusted result is compressed. In one embodiment, the image data segment of the transformed image and the reference condition are processed by an OD process. In another embodiment, the reference condition is previous image information.

Since the data stored in the memory is replaced by the compressed image, the bandwidth of the memory can be reduced. Additionally, if the memory stores an un-compressed image, since the resolution of the un-compressed image is less than the resolution of the display device, the memory still has a large usable space.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A display device (100), comprising:
a display panel (101) sequentially displaying a first image and a second image according to a first output image and a second output image; and
a timing controller (102) sequentially receiving a first input image and a second input image and sequentially generating the first output image and the second output image and comprising:
a receiving unit (201; 301) generating a processing image and a read-out image according to the first input image and the second input image;
a first transformation unit (202; 302) transforming a resolution of the processing image to generate a first transformed image;
a second transformation unit (203; 303) transforming a resolution of the read-out image to generate a second transformed image; and
a processing unit (204; 304) processing the first and the second transformed images to generate the first output image, wherein the resolution of the processing image and the resolution of the read-out image are less than a resolution of the display panel, wherein a resolution of the first transformed image is larger than the resolution of the processing image,

2. The display device (100) as claimed in claim 1, wherein a resolution of the second transformed image is larger than the resolution of the read-out image.

3. The display device (100) as claimed in one of the preceding claims, wherein a resolution of the first transformed image is equal to the resolution of the display panel.

4. The display device (100) as claimed in one of the preceding claims, wherein the processing unit processes the first and the second transformed images according to an over-driving process.

5. The display device (100) as claimed in one of the preceding claims, wherein the receiving unit (301) comprises:
a compression module (306) compressing the read-out image to generate a compressed image;
a storage module (305) storing the compressed image; and
a decompression module (307) decompressing the compressed image stored in the storage module to generate the processing image.

6. The display device as claimed in one of the preceding claims, wherein the receiving unit (301) comprises:
an adjustment module (408; 508) adjusting the read-out image to generate an adjusted image according to a reference condition, wherein
the reference condition is the processing image;
a first compression module (406; 506) compressing the adjusted image to generate a first compressed image;
a storage module (405) storing the first compressed image; and
a first decompression module (407; 507) decompressing the first compressed image stored in the storage module to generate the processing image, wherein the adjustment module (408; 508) adjusts the reference condition and the read-out image according to an over driving process to generate the adjusted image .

7. The display device as claimed in claim 6, wherein the receiving unit further comprises
a second compression module (509) compressing the first input image to generate a second compressed image, wherein the second compressed image is stored in the storage module; and
a second decompression module (510) decompressing the second compressed image stored in the storage module to generate the read-out image.

8. A control method, comprising:
sequentially receiving a first input image and a second input image (S601) and sequentially generating a first output image and a second output image;
storing the first and the second input images and generating a processing image and a read-out image (S602);
transforming a resolution of the processing image to generate a first transformed image (S603);
transforming a resolution of the read-out image to generate a second transformed image (S604);
processing the first and the second transformed images to generate the first output image (S605); and
providing the first output image to a display device to display an image (S606), wherein the resolution of the processing image and the resolution of the read-out image are less than a resolution of the display device, wherein a resolution of the first transformed image is larger than the resolution of the processing image.

9. The control method as claimed in claim 8, wherein the resolution of the first transformed image is four times the resolution of the processing image.

10. The control method as claimed in claim 8 or 9, wherein the resolution of the first transformed image is equal to the resolution of the display device.

11. The control method as claimed in one of claims 8 - 10, wherein the step of processing the first and the second transformed images to generate the first output image is to execute an over-driving process for the first and the second transformed images.

12. The control method as claimed in one of claims 8 - 11, further comprising:
compressing the read-out image to generate a compressed image (S701);
storing the compressed image to generate a stored compressed image (S702); and
decompressing the stored compressed image to generate the processing image (S703);.

13. The control method as claimed in one of claims 8-12, further comprising:
adjusting the read-out image to generate an adjusted image according to a reference condition, wherein the reference condition is the processing image;
compressing the adjusted image to generate a first compressed image;
storing the first compressed image to generate a first stored compressed image; and
decompressing the first stored compressed image to generate the processing image, wherein the step of adjusting the read-out image to generate the adjusted image according to the reference condition is to execute an over-driving process for the reference condition and the read-out image.

14. The control method as claimed in claim 13, further comprising:
compressing the first input image to generate a second compressed image;
storing the second compressed image to generate a second stored compressed image; and
decompressing the second stored compressed image to generate the read-out image.

## Patentansprüche

1. Anzeigevorrichtung (100), umfassend:
ein Anzeigefeld (101), das sequentiell ein erstes Bild und ein zweites Bild anzeigt gemäß einem ersten ausgangsseitigen Bild und einem zweiten ausgangsseitigen Bild; und eine Zeitsteuerung (102), die sequentiell ein erstes eingangsseitiges Bild und ein zweites eingangsseitiges Bild empfängt und sequentiell das erste ausgangsseitige Bild und das zweite ausgangsseitige Bild erzeugt, und umfasst:
eine Empfangseinheit (201; 301), die ein verarbeitetes Bild und ein auszulesendes Bild gemäß dem ersten eingangsseitigen Bild und dem zweiten eingangsseitigen Bild erzeugt;
eine erste Transformationseinheit (202; 302), die eine Auflösung des verarbeiten Bildes transformiert, um ein erstes transformiertes Bild zu erzeugen;
eine zweite Transformationseinheit (203; 303), die eine Auflösung des auszulesenden Bildes transformiert, um ein zweites transformiertes Bild zu erzeugen; und
eine Verarbeitungseinheit (204; 304), die die ersten und die zweiten transformierten Bilder verarbeitet, um das erste ausgangsseitige Bild zu erzeugen, wobei die Auflösung des verarbeiteten Bildes und die Auflösung des auszulesenden Bildes geringer sind als eine Auflösung des Anzeigefeldes, wobei eine Auflösung des ersten transformierten Bild größer ist als die Auflösung des verarbeiteten Bildes.

2. Anzeigevorrichtung (100) nach Anspruch 1, wobei eine Auflösung des zweiten transformierten Bildes größer ist als die Auflösung des auszulesenden Bildes.

3. Anzeigevorrichtung (100) nach einem der vorhergehenden Ansprüche, wobei eine Auflösung des ersten transformierten Bildes gleich der Auflösung der Anzeigetafel ist.

4. Anzeigevorrichtung (100) nach einem der vorhergehenden Ansprüche, wobei die Verarbeitungseinheit das erste und das zweite transformierte Bild gemäß eines Übersteuerungsprozesses verarbeitet.

5. Anzeigevorrichtung (100) nach einem der vorhergehenden Ansprüche, wobei die Empfangseinheit (301) umfasst:
ein Komprimierungsmodul (306), das das auszulesende Bild komprimiert, um ein komprimiertes Bild zu erzeugen;
ein Speichermodul (305), das das komprimierte Bild speichert; und
ein Dekomprimierungsmodul (307), das das komprimierte Bild, das in dem Speichermodul gespeichert ist, dekomprimiert, um das verarbeitete Bild zu erzeugen.

6. Anzeigevorrichtung nach einem der vorhergehenden Ansprüche, wobei die Empfangseinheit (301) umfasst:
ein Anpassungsmodul (408; 508), das das auszulesende Bild anpasst, um ein angepasstes Bild gemäß einer Referenzbedingung zu erzeugen, wobei die Referenzbedingung dem verarbeiteten Bild entspricht;
ein erstes Komprimierungsmodul (406; 506), das das angepasste Bild komprimiert, um ein erstes komprimiertes Bild zu erzeugen;
ein Speichermodul (405), das das erste komprimierte Bild komprimiert; und
ein erstes Dekomprimierungsmodul (407; 507), das das erste komprimierte Bild, das in dem Speichermodul gespeichert ist, dekomprimiert, um das verarbeitete Bild zu erzeugen, wobei das Anpassungsmodul (408; 508) die Referenzbedingung und das auszulesende Bild gemäß einem Übersteuerungsprozess anpasst, um das angepasste Bild zu erzeugen.

7. Anzeigevorrichtung nach Anspruch 6, wobei die Empfangseinheit ferner umfasst
ein zweites Komprimierungsmodul (509), das das erste eingangsseitige Bild komprimiert, um ein zweites komprimiertes Bild zu erzeugen, wobei das zweite komprimierte Bild in dem Speichermodul gespeichert ist; und
ein zweites Dekomprimierungsmodul (510), das das zweite komprimierte Bild, das in dem Speichermodul gespeichert ist, dekomprimiert, um das auszulesende Bild zu erzeugen.

8. Steuerungsverfahren, umfassend:
sequentielles Empfangen eines ersten eingangsseitigen Bildes und eines zweiten eingangsseitigen Bildes (S601) und sequentielles Erzeugen eines ersten ausgangsseitigen Bildes und ein zweiten ausgangsseitigen Bildes;
Speichern des ersten und des zweiten eingangsseitigen Bildes und Erzeugen eines verarbeiteten Bildes und eines auszulesenden Bildes (S602);
Transformieren einer Auflösung des verarbeiteten Bildes, um ein erstes transformiertes Bild zu erzeugen (S603);
Transformieren einer Auflösung des auszulesenden Bildes, um ein zweites transformiertes Bild zu erzeugen (S604);
Verarbeiten des ersten und des zweiten transformierten Bildes, um das erste ausgangsseitige Bild zu erzeugen (S605); und
Bereitstellen des ersten ausgangsseitigen Bildes für eine Anzeigevorrichtung, um ein Bild anzuzeigen (S606), wobei die Auflösung des verarbeiteten Bildes und die Auflösung des auszulesenden Bildes geringer ist als eine Auflösung der Anzeigevorrichtung, wobei eine Auflösung des ersten transformierten Bildes größer ist als die Auflösung des verarbeiteten Bildes.

9. Steuerungsverfahren nach Anspruch 8, wobei die Auflösung des ersten transformierten Bildes der vierfachen Auflösung des verarbeiteten Bildes entspricht.

10. Steuerverfahren nach Anspruch 8 oder 9, wobei die Auflösung des ersten transformierten Bildes gleich der Auflösung der Anzeigevorrichtung ist.

11. Steuerverfahren nach einem der Ansprüche 8 - 10, wobei der Schritt der Verarbeitung des ersten und des zweiten transformierten Bildes, um das erste ausgangsseitige Bild zu erzeugen, darin besteht, einen Übersteuerungsprozess für das erste und das zweite transformierte Bild auszuführen.

12. Steuerverfahren nach einem der Ansprüche 8-11, weiter umfassend:
Komprimieren der auszulesenden Bildes, um ein komprimiertes Bild zu erzeugen (S701);
Speichern des komprimierten Bildes, um ein gespeichertes komprimiertes Bild zu erzeugen (S702); und
Dekomprimieren des gespeicherten komprimierten Bildes, um das verarbeitete Bild zu erzeugen (S703).

13. Steuerverfahren nach einem der Ansprüche 8-12, ferner umfassend:
Anpassen der auszulesenden Bildes, um ein angepasstes Bild gemäß einer Referenzbedingung zu erzeugen, wobei die Referenzbedingung dem verarbeiteten Bild entspricht;
Komprimieren der angepassten Bildes, um ein erstes komprimiertes Bild zu erzeugen;
Speichern des ersten komprimierten Bildes, um ein erstes gespeichertes komprimiertes Bild zu erzeugen; und
Dekomprimieren des ersten gespeicherten komprimierten Bildes, um das verarbeitete Bild zu erzeugen, wobei der Schritt des Anpassens des auszulesenden Bildes, um das angepasste Bild gemäß der Referenzbedingung zu erzeugen, darin besteht, einen Übersteuerungsprozess für die Referenzbedingung und das auszulesende Bild ausführen.

14. Steuerverfahren nach Anspruch 13, ferner umfassend:
Komprimieren des ersten eingangsseitigen Bildes, um ein zweites komprimiertes Bild zu erzeugen;
Speichern des zweiten komprimierten Bildes, um ein zweites gespeichertes komprimiertes Bild zu erzeugen; und
Dekomprimieren des zweiten gespeicherten komprimierten Bildes, um das auszulesende Bild zu erzeugen.

## Revendications

1. Un dispositif d'affichage (100), comprenant :
un panneau d'affichage (101) affichant séquentiellement une première image et une seconde image selon une première image de sortie et une seconde image de sortie ; et un contrôleur d'horloge (102) recevant séquentielle une première image d'entrée et une seconde image d'entrée et générant séquentiellement la première image de sortie et la seconde image de sortie et comportant :
une unité de réception (201 ; 301) générant une image de traitement et une image d'affichage en fonction de la première image d'entrée et de la seconde image d'entrée ;
une première unité de transformation (202 ; 302) transformant une résolution de l'image de traitement pour générer une première image transformée ;
une seconde unité de transformation (203 ; 303) transformant une résolution de l'image d'affichage pour générer une seconde image transformée ; et
une unité de traitement (204 ; 304) pour traiter les première et seconde images transformées pour générer la première image de sortie, dans lequel la résolution de l'image de traitement et la résolution de l'image d'affichage sont inférieures à une résolution de l'écran d'affichage, dans lequel une résolution de la première image transformée est supérieure à la résolution de l'image de traitement.

2. Le dispositif d'affichage (100) tel que revendiqué dans la revendication 1, dans lequel une résolution de la seconde image transformée est supérieure à la résolution de l'image d'affichage.

3. Le dispositif d'affichage (100) tel que revendiqué dans l'une des revendications précédentes, dans lequel une résolution de la première image transformée est égale à la résolution du panneau d'affichage.

4. Le dispositif d'affichage (100) tel que revendiqué dans l'une des revendications précédentes, dans lequel l'unité de traitement traite les première et seconde images transformée selon un procédé de sur-traitement.

5. Le dispositif d'affichage (100) tel que revendiqué dans l'une des revendications précédentes, dans lequel l'unité de réception (301) comporte :
un module de compression (306) pour comprimer l'image d'affichage pour générer une image comprimée ;
un module de stockage (305) pour le stockage de l'image comprimée ; et
un module de décompression (305) pour décompresser l'image comprimée stockée au sein du module de stockage afin de générer l'image de traitement.

6. Le dispositif d'affichage (100) tel que revendiqué dans l'une des revendications précédentes, dans lequel l'unité de réception comporte :
un module de réglage (408 ; 508) pour régler l'image d'affichage de façon à générer une image réglée en fonction d'une condition de référence, dans lequel la condition de référence est l'image de traitement ;
un premier module de compression (406 ; 506) pour comprimer l'image réglée afin de générer une première image compressée ;
un module de stockage (405) pour le stockage de la première image compressée ; et
un premier module de décompression (407, 507) décompressant la première image compressée stockée au sein du module de stockage pour générer l'image de traitement, dans lequel le module de réglage (408 ; 508) règle la condition de référence et l'image d'affichage en fonction d'un procédé de sur-traitement afin de générer l'image réglée

7. Le dispositif d'affichage (100) tel que revendiqué dans la revendication 6, dans lequel l'unité de réception comporte en outre :
un second module de compression (509) compressant la première image d'entrée pour générer une seconde image compressée, dans lequel la seconde image compressée est stockée au sein du module de stockage ; et
un second module de décompression (510) décompressant la seconde image compressée stockée au sein du module de stockage pour générer l'image d'affichage.

8. Un procédé de commande, comprenant :
la réception séquentielle d'une première image d'entrée et d'une seconde image d'entrée (S601) et la génération séquentielle d'une première image de sortie et d'une seconde image de sortie ;
le stockage des première et seconde images d'entrée et la génération d'une image de traitement et d'une image d'affichage (S602) ;
la transformation d'une résolution de l'image de traitement pour générer une première image transformée (S603) ;
la transformation d'une résolution de l'image d'affichage pour générer une seconde image transformée (S604) ;
le traitement des première et seconde images transformées pour générer la première image de sortie (S605) ; et
la fourniture de la première image de sortie à un dispositif d'affichage pour l'affichage d'une image (S606), dans lequel la résolution de l'image de traitement et la résolution de l'image d'affichage sont inférieures qu'une résolution du dispositif d'affichage, dans lequel une résolution de la première image transformée est supérieure que la résolution de l'image de traitement.

9. Le procédé tel que revendiqué dans la revendication 8, dans lequel la résolution de la première image transformée est quatre fois supérieure à la résolution de l'image de traitement.

10. Le procédé tel que revendiqué dans la revendication 8 ou 9, dans lequel la résolution de la première image transformée est égale à la résolution du dispositif d'affichage.

11. Le procédé tel que revendiqué dans l'une des revendications 8-10, dans lequel l'étape de traitement des première et seconde images transformées pour générer la première image de sortie consiste en un procédé de sur-traitement pour les premières et secondes images transformées.

12. Le procédé tel que revendiqué dans l'une des revendications 8-11, comprenant en outre :
la compression de l'image d'affichage pour générer une image compressée (S701) ;
le stockage de l'image compressée pour générer une image compressée (S702) ; et
la décompression de l'image compressée stockées pour générer l'image de traitement (S703) ;

13. Le procédé tel que revendiqué dans l'une des revendications 8-12, comprenant en outre :
le réglage de l'image d'affichage pour générer une image réglée en fonction d'une condition de référence, dans lequel la condition de référence est l'image de traitement ;
la compression de l'image réglée pour générer une première image compressée ;
le stockage de la première image compressée pour générer une première image compressée stockée ; et
la décompression de la première image compressée stockée pour générer l'image de traitement, dans lequel l'étape de réglage de l'image d'affichage pour la génération de l'image réglée en fonction de la condition de référence est l'exécution d'un procédé de sur-traitement pour la condition de référence et l'image d'affichage.

14. Le procédé tel que revendiqué dans la revendication 13, comprenant en outre :
la compression de la première image d'entrée pour générer une seconde image compressée ;
le stockage de la seconde image compressée pour générer une seconde image compressée stockées ; et
la décompression de la seconde image compressée stockée pour générer l'image d'affichage.
